# EUROPEAN PATENT SPECIFICATION

(11) **EP 1 405 518 B1**
(45) Date of publication and mention of the grant of the patent: **17.05.2006**
(21) Application number: 02733044.8
(22) Date of filing: 24.05.2002
(51) Int. Cl.: H04N 7/173, H04N 5/765

(54) **VIDEO PLAYBACK DEVICE CAPABLE OF SHARING RESOURCES AND METHOD OF OPERATION**
VIDEOWIEDERGABEGERÄT UND -VERFAHREN MIT DER FÄHIGKEIT DER GEMEINSAMEN NUTZUNG VON RESOURCEN
LECTEUR-ENREGISTREUR VIDEO PERMETTANT UN PARTAGE DES RESSOURCES, ET PROCEDE DE FONCTIONNEMENT

(30) Priority: 29.05.2001 US 866823
(43) Date of publication of application: 07.04.2004
(73) Proprietor: Koninklijke Philips Electronics N.V., 5621 BA Eindhoven (NL)
(72) Inventor: AGNIHOTRI, Lalitha, NL-5656 AA Eindhoven (NL); MCGEE, Thomas, F., NL-5656 AA Eindhoven (NL); MILLER, Andrew, T., NL-5656 AA Eindhoven (NL)
(74) Representative: Groenendaal, Antonius W. M.
(86) International application number: PCT/IB2002/001875
(87) International publication number: WO 2002/098134

(56) References cited:
- WO-A-00/07368
- FR-A- 2 779 593
- US-A- 5 815 146
- US-A- 5 928 327

## Description

### TECHNICAL FIELD OF THE INVENTION

The present invention is generally related to video playback devices and, more specifically, to a video playback device capable of sharing hardware resources with similar video playback devices via an external network.

### BACKGROUND OF THE INVENTION

A wide variety of video playback devices are available in the marketplace. Most people own, or are familiar with, a video cassette recorder (VCR). More recently, video recorders that use computer magnetic hard disks rather than magnetic cassette tapes to store video programs have appeared in the market. For example, the ReplayTV™ recorder and the TiVO™ recorder digitally record television programs on hard disk drives using, for example, MPEG-2 compression. Additionally, some video playback devices may record on a readable/writable digital versatile disk (DVD) rather than a magnetic disk.

The great advantage of a video playback device is that it permits a user to time-shift his or her television viewing habits. The user is free to watch a program hours, days or even weeks after it was originally recorded. Video playback devices also permit a user to view rented video.

Nonetheless, the capabilities of video playback devices are relatively limited. Video playback devices have a relatively limited amount of storage space that may easily be consumed by recorded television programs, which are typically many hundreds of megabits in size. Also, video playback devices are capable of recording only as many programs as there are tuners. A video playback device with a single tuner can only record one program at a time. If a viewer wishes to record two simultaneously broadcast programs, the viewer must use two video playback devices.

It is desirable to expand the capabilities of video playback devices. In particular, there is a need for an improved disk-based video playback device that is capable of recording a video program when there is insufficient free space remaining on the disk. More particularly, there is a need for an improved video playback device that is capable of recording two or more video programs at a time.

In a published United States patent no. US 5,815,146, there is described a video server for providing Video-On-Demand. Associated with the server is a plurality of data sources coupled individually to a first and second bi-directional data/instruction switch. The first switch is additionally coupled to a data storage system and the second switch is coupled to a network interface. A real time controller is coupled to the network interface. A real time controller is coupled to the data sources and the switches and is operable to couple any part of the of the data storage system to any selected data source and any given network channel to any selected data source. A control system coupled to the real time controller and the second switch provides support services to the real time controller and acts as a gateway to third party services and products. The data storage system is largely comprised of disk drive arrays. Video data is striped across the individual arrays, each video data program that a user requests being striped across one array. Each video server is tolerant of individual failures in the data storage system among the data sources, as operating portions of the data storage system and spare data sources can be rapidly switched to substitute for failed units. The server can also be readily expanded and provides a user experience similar to that of a video cassette recorder.

In a French patent application no. 2,779,593, there is described a communication system arranged to provide services to users thereof. Access to the services is achieved through access points operating over several networks supported by different media. Access to the services allows users to access resources of the system. The system comprises searching facilities for the different media in order to ensure that an interface can be established between the interface and the service demanded.

In a published United States patent no. US5,928,327, there is described a video server system and method. The system is of a modular and expandable design to deliver a plurality of video streams on user demand and under user control. The video server system and method has a central control module adapted to receive control demands such as SELECT, PLAY, REWIND, PAUSE and so forth to select and replay a video from a plurality of videos stored in the storage module. The central control module is a computer motherboard having a first small computer serial interface (SCSI) coupled to the storage device. The central control module also has memory for buffering data blocks of video retrieved from the storage device or devices prior to delivery to the delivery module also included in the system. The delivery module is also a computer motherboard having memory and also having a plurality of video processors for processing the video data prior to coupling the data to a client location. The delivery module additionally has a SCSI interface configured to operate in a target mode so that the central control module transfers video data to the delivery module in the same manner that it would use if it were writing to a conventional SCSI disk drive.

In a published international PCT application no. PCT/US99/04894 (WO 00/07368), there is described a multimedia time warping system. The system is operable to allow a user thereof to store selected television programs while the user is simultaneously watching or viewing another program. In a preferred implementation of the system, the system accepts television (TV) input streams in a multitude of analog and digital forms. The TV streams are converted to (MPEG) formatted streams for internal transfer and manipulation and are parsed and separated into video and audio components. The components are stored in temporary buffers. Events are recorded that indicate the type of component that has been found, where it is located, and when it occurred. The video and audio components are stored on a storage device; when the program is requested for display, the video and audio components are extracted from the storage devices and reassembled into an MPEG stream which is sent to a decoder. The decoder converts the MPEG stream into TV output signals and delivers the TV output signals to a TV receiver. User control commands are accepted and sent through the system. These commands affect the flow of said MPEG stream and allow the user to view stored programs with at least the following functions: reverse, fast forward, play pause, index, fast/slow reverse play and fast/slow play.

### SUMMARY OF THE INVENTION

To address the above-discussed deficiencies of the prior art, it is a primary object of the present invention as defined in the claims to provide an improved video playback device containing a disk storage device that is capable of sharing resources with similar video playback devices via an external communication network connected to the video playback device. A first video playback device communicates with the other similar video playback devices and is able to determine if a second video playback device is currently in use and when it is scheduled to be in use. The first video playback device is also able to determine how much disk space is available on the second video playback device. If the second video playback device has resources available, the first video playback device is able to send the second video playback device a recording task that causes the second video playback device to record a television program under the control of the first video playback device.

To address the above-discussed deficiencies of the prior art, it is another primary object of the present invention to provide a video playback device comprising: 1) a disk storage device capable of storing television programs received from an external source; 2) a first controller capable of receiving a first program recording command, wherein the first program recording command is operable to cause the first controller to store a first television program on the disk storage device during a first time slot; and 3) a second controller capable of determining if sufficient space is available on the disk storage device to store the first television program, wherein the second controller, in response to a determination that sufficient space is not available on the disk storage device is further capable of identifying in an external communication network a second remote video playback device capable of recording the first television program and transmitting a recording task request to the second remote video playback device, wherein the recording task request is operable to cause the second remote video playback device to record the first television program during the first time slot.

According to one embodiment of the present invention, the second controller is further capable of comparing the first program recording command to a second program recording command previously received by the first controller and determining if a second time slot associated with the second program recording command overlaps the first time slot.

According to another embodiment of the present invention, the second controller, in response to a determination that the first and second time slots overlap, is further capable of accessing the second remote video playback device via the external communication network and transmitting the recording task request to the second remote video playback device, wherein the recording task request is operable to cause the second remote video playback device to record the first television program during the first time slot.

According to still another embodiment of the present invention, the video playback device further comprises a memory for storing the first and second program recording commands in a recording schedule table.
According to yet another embodiment of the present invention, the second controller identifies the second remote video playback device by accessing a central server in the external communication network and requesting from the central server a list of remote video playback devices capable of recording the first television program.

According to a further embodiment of the present invention, the second controller is capable of transmitting to the central server disk space status information regarding an amount of available space on the disk storage device.

According to a still further embodiment of the present invention, the second controller is further capable of transmitting to the central server a program recording schedule regarding television programs scheduled to be recorded by the video playback device.

According to a yet further embodiment of the present invention, the second controller is further capable of receiving from a third video playback device an incoming recording task request, wherein the incoming recording task request is operable to cause the video playback device to record a requested television program associated with the incoming recording task request.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art should appreciate that they may readily use the conception and the specific embodiment disclosed as a basis for modifying or designing other structures for carrying out the same purposes of the present invention. Those skilled in the art should also realize that such equivalent constructions do not depart from the spirit and scope of the invention in its broadest form.

Before undertaking the DETAILED DESCRIPTION OF THE INVENTION, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which:
FIGURE 1 illustrates an exemplary video playback device and television set according to one embodiment of the present invention;
FIGURE 2 illustrates an exemplary video playback device in detail according to one embodiment of the present invention;
FIGURE 3 illustrates an exemplary television program according to one embodiment of the present invention;
FIGURE 4A illustrates the contents of a resource sharing server according to one embodiment of the present invention;
FIGURE 4B illustrates the contents of the hard disk drive in the exemplary video playback device according to one embodiment of the present invention; and
FIGURE 5 is a flow diagram illustrating the operation of an exemplary video playback device according to one embodiment of the present invention.

### DETAILED DESCRIPTION OF THE INVENTION

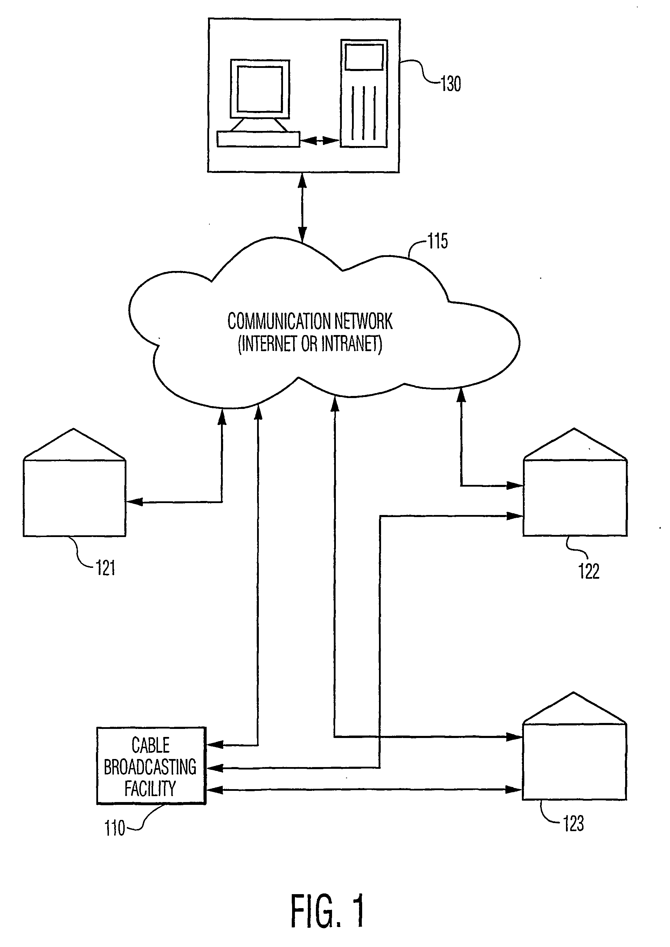

FIGURES 1 through 5, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged video playback device.

FIGURE 1 illustrates a communication system in which a plurality of video playback devices in accordance with the principles of the present invention share hardware resources. Cable broadcasting facility 110 transmits television programs to subscriber premises 121, 122, and 123. Each of subscriber premises has therein a video playback device according to the principles of the present invention. As will be described below in greater detail, the video playback devices communicate via Internet protocol communication network 115 (hereafter simply Internet 115) in order to share hardware resource information and to send and receive programming tasks. According to an exemplary embodiment of the present invention, resource sharing server 130 acts as a central repository of information regarding available hardware resources on each video playback device that are available for sharing with other video playback devices.

The video playback devices in subscriber premises 121-123 may communicate over Internet 115 via cable modem connections to cable broadcasting facility 110. Alternatively, the video playback devices in subscriber premises 121-123 may communicate over Internet 115 via public switched telephone network (PSTN) connections, such as DSL connections or V.90 compatible modems. If the video playback devices in subscriber premises 121-123 communicate over Internet 115 using PSTN connections, cable broadcasting facility 110 may be replaced by a one-way wireless broadcasting system or a satellite television system.

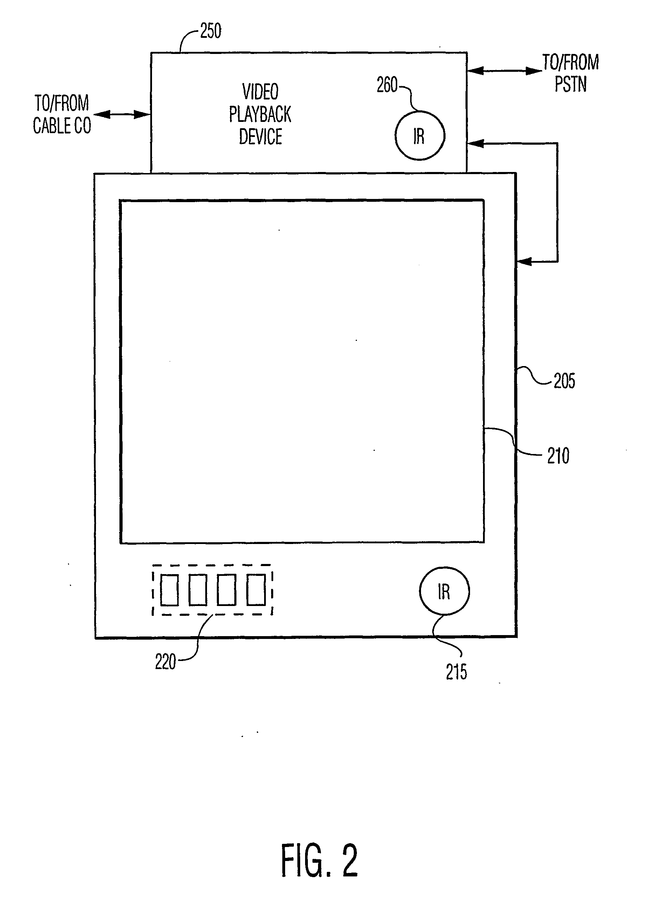

FIGURE 2 illustrates exemplary video playback device 250 and television set 205 in subscriber premises 121 (from FIGURE 1) according to one embodiment of the present invention. Video playback device 250 receives television signals via an external source, such as a cable broadcasting facility 110 (Cable Co.), or alternatively, via a satellite dish, or a local RF antenna. Video playback device 250 transmits a viewer-selected channel to television set 205. In an advantageous embodiment of the present invention, video playback device 250 also transmits and receives Internet protocol (IP) packets via a two-way cable connection to cable broadcasting facility 110. In other embodiments, video playback device 250 may also have the capability to send and receive Internet protocol (IP) packets signals via a connection to the public switched telephone network.

In RECORD mode, video playback device 250 may demodulate an incoming radio frequency (RF) television signal to produce a baseband video signal that is recorded and stored on a storage medium within or connected to video playback device 250. In PLAY mode, video playback device 250 reads a stored baseband video signal (i.e., program) selected by the user from the storage medium and transmits it to television set 205.

According to an exemplary embodiment of the present invention, video playback device 250 is a disk drive-based device, such as a ReplayTV recorder or a TiVO recorder. Video playback device 250 stores and retrieves the incoming television signals to and from a computer magnetic hard disk rather than a magnetic cassette tape. In other embodiments, video playback device 250 may store and retrieve from a local read/write (R/W) digital versatile disk (DVD) or R/W CD-ROM. Thus, the local storage medium may be fixed (i.e., hard disk drive) or removable (i.e., DVD, CD-ROM).

Video playback device 250 comprises infrared (IR) sensor 260 that receives commands (such as Channel Up, Channel Down, Volume Up, Volume Down, Record, Play, Fast Forward (FF), Reverse, and the like) from a remote control device operated by the user. Television set 205 is a conventional television comprising screen 210, infrared (IR) sensor 215, and one or more manual controls 220 (indicated by a dotted line). IR sensor 215 also receives commands (such as volume up, volume down, power ON/OFF) from a remote control device operated by the viewer.

It should be noted that video playback device 250 is not limited to receiving a particular type of incoming television signal from a particular type of source. As noted above, the external source may be a cable TV connection, a conventional RF broadcast antenna, or a satellite dish. The incoming television signal may be a digital signal, an analog signal, or Internet protocol (IP) packets. However, for the purposes of simplicity and clarity in explaining the principles of the present invention, the descriptions that follow shall generally be directed to an embodiment in which video playback device 250 receives incoming television signals and IP traffic from cable broadcasting facility 110.

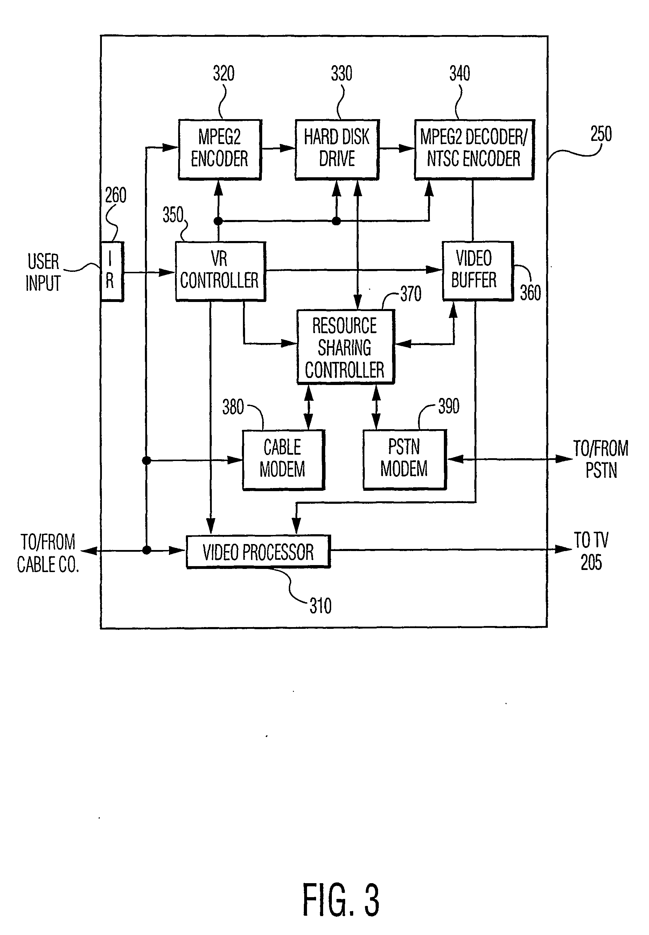

FIGURE 3 illustrates exemplary video playback device 250 in greater detail according to one embodiment of the present invention. Video playback device 250 comprises IR sensor 260, video processor 310, MPEG2 encoder 320, hard disk drive 330, MPEG2 decoder/NTSC encoder 340, and video recorder (VR) controller 350. Video playback device 250 further comprises video buffer 360, resource sharing controller 370, cable modem 380 and PSTN modem 390. VR controller 350 directs the overall operation of video playback device 250, including View mode, Record mode, Play mode, Fast Forward (FF) mode, Reverse mode, Browser mode, and update mode, among others.

In VIEW mode, VR controller 350 causes the incoming television signal from the cable service provider to be demodulated and processed by video processor 310 and transmitted to television set 205, without storing or retrieving from hard disk drive 330. Video processor 310, which may be, for example, a TriMedia (TM) 2000 media processor, contains radio frequency (RF) front-end circuitry for receiving incoming television signals from the cable service provider, tuning to a user-selected channel, and converting the selected RF signal to a baseband television signal (e.g., super video or S-Video signal) suitable for display on television set 205. Video processor 310 also may receive a conventional NTSC signal from MPEG2 decoder/NTSC encoder 340 (after buffering in video buffer 360) during Play mode and transmitting a baseband television signal (e.g., S-Video signal) to television set 205.

In RECORD mode, VR controller 350 causes the incoming television signal to be stored on hard disk drive 330. Under the control of VR controller 350, MPEG2 encoder 320 receives the incoming television signal from the cable service provider and converts the received RF signal to MPEG format for storage on hard disk drive 330. In PLAY mode, VR controller 350 directs hard disk drive 330 to stream the stored television signal (i.e., program) to MPEG2 decoder/NTSC encoder 340, which converts the MPEG2 data retrieved from hard disk drive 330 to, for example, an S-Video signal that is buffered in video buffer 360 before video processor 310 transmits it to television set 305.

It should be noted that the choice of the MPEG2 standard for MPEG2 encoder 320 and MPEG2 decoder/NTSC encoder 340 is by way of illustration only. In alternate embodiments of the present invention, the encoder and decoder may comply with one or more of the MPEG-1, MPEG-2, and MPEG-4 standards or any other video compression standard.

For the purposes of this application and the claims that follow, hard disk drive 330 is defined to include any mass storage device that is both readable and writable, including conventional magnetic disk drives and optical disk drives for read/write digital versatile disks (DVD-RW), re-writable CD-ROMs, VCR tapes and the like. In fact, hard disk drive 330 need not be fixed in the conventional sense that is permanently embedded in video playback device 250. Rather, hard disk drive 330 includes any mass storage device that is dedicated to video playback device 250 for the purpose of storing recorded video programs. Thus, hard disk drive 330 may include an attached peripheral drive or removable disk drives (whether embedded or attached), such as a jukebox device that holds read/write DVDs or re-writable CD-ROMs. Furthermore, in an advantageous embodiment of the present invention, hard disk drive 330 may include external mass storage devices that video playback device 250 may access and control via a network connection (e.g., Internet protocol (IP) connection), including, for example, a disk drive in the user's home personal computer (PC) or a disk drive on a server at the user's Internet service provider (ISP).

In accordance with the principles of the present invention, resource sharing controller 370 is capable of accessing resource sharing server 130 via Internet 115 via cable modem 380 or public switched telephone network (PSTN) modem 390. When the user programs video playback device 250 to record a newly requested program between certain start and stop times, resource sharing controller 370 is able to determine (according to the recording duration) whether or not there is sufficient disk space to record the requested program. Resource sharing controller 370 is also able to determine if the programming times of the newly requested program overlap with the recording times of an already scheduled recording. If there is insufficient disk space or if there is conflict with another scheduled programming, resource sharing controller is capable of searching for available resources on resource sharing server 130. When available resources are found on a second video playback device, resource sharing controller 370 can transmit a recording task to the second video playback device. In an advantageous embodiment of the present invention, resource sharing controller 370 may transmit several recording tasks to several different video playback devices as redundant backups in case a conflict arises after an initial recording task is sent to the second video playback device. Resource sharing controller 370 also is able to receive and to perform a recording task transmitted by another video playback device.

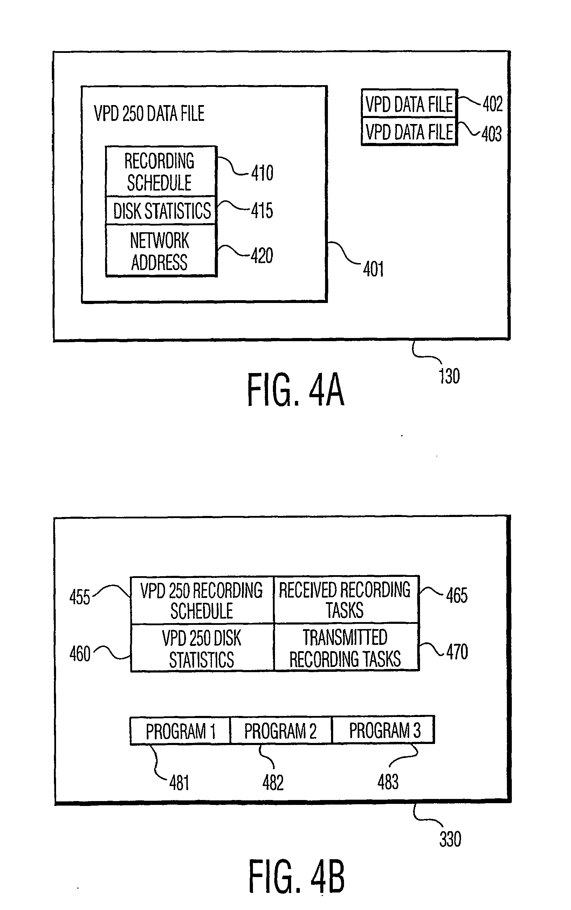

FIGURE 4A illustrates the contents of resource sharing server 130 according to one embodiment of the present invention. Resource sharing server 130 stores exemplary video playback device (VPD) data files 401-403, each of which contains information about the availability of the hardware resources of one of the video playback devices that communicates with resource sharing server 130. Exemplary VPD data file 401 is the VPD data file for video playback device 250. VPD data file 401 comprises recording schedule table 410, disk statistics table 415, and network address table 420. VPD data files 402 and 403 are functionally equivalent to VPD data file 401 and need not be discussed in separate detail.

Recording schedule table 410 contains a listing of all of the television programs that video playback device 250 is scheduled to record. Optionally, recording schedule table 410 may also contain a listing of all previously recorded television programs, in order to avoid redundant recordings. Disk statistics table 415 indicates the amount of disk space that is used and the amount of disk space that is free for recording programs. Finally, network address table 420 contains the network address of video playback device 250. Other video playback devices use the network address of video playback device 250 to transmit recording task requests to video playback device 250. When resource sharing server 130 receives a resource availability request from other remote video playback devices, resource sharing server 130 may use the information stored in VPD data files 401, 402, and 403 to determine which video playback devices are able to perform the recording task associated with the resource availability request. Alternatively, resource sharing server 130 may transmit the information stored in VPD data files 401, 402, and 403 to the requesting remote video playback device, which then determines which video playback devices are able to perform the recording task associated with the resource availability request.

FIGURE 4B illustrates the contents of hard disk drive 230 according to one embodiment of the present invention. Hard disk drive 230 stores recording schedule table 455 of video playback device 250, disk statistics table 460 for remote video playback device 250, received recording tasks table 465, and transmitted recording tasks table 470. Additionally, hard disk drive 330 stores exemplary television programs 481, 482, and 483, which are arbitrarily labeled Program 1, Program 2, and Program 3, respectively.

When video playback device 250 transmits a recording task request to a remote video playback device, a copy of the recording task request is stored in transmitted recording tasks table 470. Video playback device 250 uses the data in transmitted recording tasks table 470 to keep track of outstanding recording tasks and to retrieve the recorded program once recording is complete. When video playback device 250 receives a recording task request from a remote video playback device, a copy of the recording task request is stored in received recording tasks table 470. Video playback device 250 uses the data in received recording tasks table 470 to keep track of outstanding recording tasks and to transmit the recorded program to the correct destination. In an advantageous embodiment of the present invention, if video playback device 250 receives a recording task for a television program that already has been recorded and stored in video playback device 250, video playback device 250 may simply (and immediately) transmit the already recorded copy of the television program via Internet 115 to the requesting video playback device, instead of recording it.

Video playback device 250 also uses the data in received recording tasks table 470 to update recording schedule table 455. Thus, recording schedule table 455 contains a listing of all recording tasks that are entered by the user of video playback device 250 and all recording tasks that are received from other video playback devices and accepted by video playback device 250. Finally, disk statistics table 460 indicates the amount of disk space that is used on video playback device 460 and the amount of disk space that remains free for recording programs.

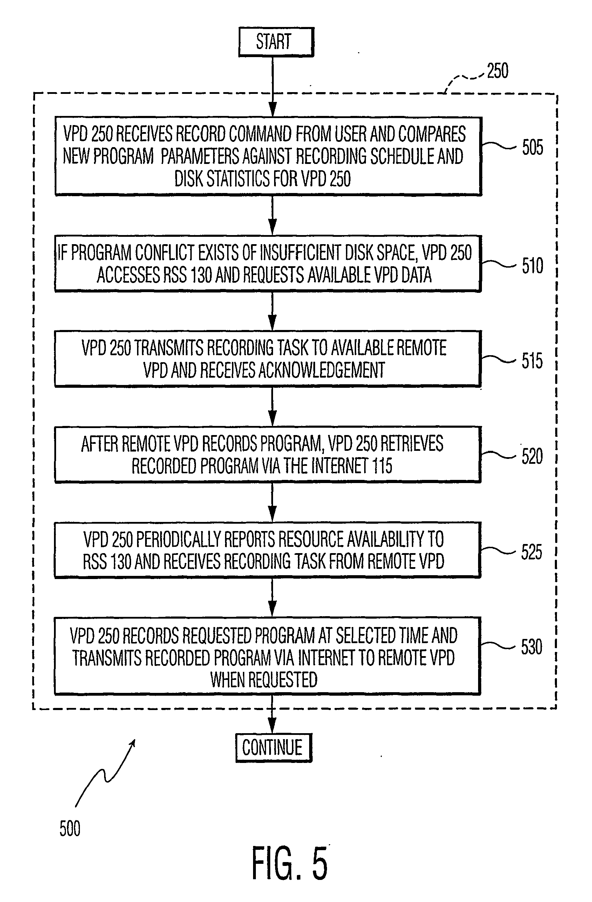

FIGURE 5 depicts flow diagram 500, which illustrate the operation of exemplary video playback device 500 according to one embodiment of the present invention. Initially, video playback device 250 receives a RECORD command from the user and compares the new program parameters (e.g., start time, stop time) against the recording schedule 455 and disk statistics 460 for video playback device 250 (process step 505). If a programming conflict exists, or if there is insufficient disk space, video playback device 250 accesses resource sharing server 130 and requests data regarding available video playback devices (process step 510). At this point, video playback device 250 may select a remote video playback device to perform the requested recording. Alternatively, resource sharing server 130 may select a remote video playback device to perform the requested recording. Resource sharing server 130 then transmits the relevant information about the selected remote video playback device to video playback device 250.

In any event, video playback device 250 transmits a recording task to the available remote video playback device and receives an acknowledgment in return (process step 515). If an acknowledge is not received, video playback device 250 may select another remote video playback device, instead. After remote video playback device records the requested program, video playback device 250 retrieves the recorded program via Internet 115 (process step 520).

Additionally, video playback device 250 periodically reports resource availability to resource sharing server 130 and receives recording task from remote video playback device (process step 525). Video playback device 250 records requested program at selected time and transmits recorded program via intemet to remote video playback device when requested (process step 530).

Although the present invention has been described in detail, those skilled in the art should understand that they can make various changes, substitutions and alterations herein without departing from the spirit and scope of the invention in its broadest form.

The invention may be summarized as follows;

There is disclosed a video playback device comprising: 1) a disk storage device for storing television programs received from an external source; 2) a first controller for receiving a first program recording command, wherein the first program recording command is operable to cause the first controller to store a first television program on the disk storage device during a first time slot; and 3) a second controller for determining if sufficient space is available on the disk storage device to store the first television program. The disk storage device, in response to a determination that sufficient space is not available on the disk storage device, identifies in an external communication network a second remote video playback device capable of recording the first television program and transmits a recording task request to the second remote video playback device. The recording task request causes the second remote video playback device to record the first television program during the first time slot.

## Claims

1. A recording and playback device (250) comprising:
a storage device (330) capable of storing television programs received from an external source;
a first controller (350) capable of receiving a first program recording command, wherein said first program recording command is operable to cause said first controller (350) to store a first television program on said disk storage device (330) during a first time slot; and
a second controller (370) capable of determining if sufficient space is available on said storage device (330) to store said first television program, wherein said second controller (370), in response to a determination that sufficient space is not available on said storage device (330) is further capable of identifying in an external communication network a plurality of remote recording and playback devices capable of recording said first television program and transmitting a recording task request to said remote recording and playback devices, wherein said recording task request is operable to cause said remote recording and playback devices to record said first television program during said first time slot, said remote recording and playback devices thereby being operable to provide data storage redundancy in an event of at least one of the remote recording and playback devices becoming unavailable for recording during said first time slot on account of priority conflict.

2. A recording and playback device (250) as claimed in Claim 1 wherein said second controller (370) is further capable of comparing said first program recording command to a second program recording command previously received by said first controller (350) and determining if a second time slot associated with said second program recording command overlaps said first time slot.

3. A recording and playback device (250) as claimed in Claim 2 wherein said second controller (370), in response to a determination that said first and second time slots overlap, is further capable of accessing one or more of said remote recording and playback devices via said external communication network and transmitting said recording task request to said one or more of said remote recording and playback devices, wherein said recording task request is operable to cause said one or more of said remote recording and playback devices to record said first television program during said first time slot.

4. A recording and playback device (250) as claimed in Claim 3 further comprising a memory for storing said first and second program recording commands in a recording schedule table (455).

5. A recording and video playback device (250) as claimed in Claim 3 wherein said second controller (370) identifies said remote recording and playback devices by accessing a central server in said external communication network and requesting from said central server a list of remote recording and playback devices capable of recording said first television program.

6. A recording and playback device (250) as claimed in Claim 5 wherein said second controller (370) is capable of transmitting to said central server disk space status information regarding an amount of available space on said storage devices (330).

7. A recording and playback device (250) as claimed in Claim 6 wherein said second controller (370) is further capable of transmitting to said central server a program recording schedule regarding television programs scheduled to be recorded by said recording and playback device (250).

8. A recording and playback device (250) as claimed in Claim 7 wherein said second controller (370) is further capable of receiving from a third video playback device an incoming recording task request, wherein said incoming recording task request is operable to cause said video playback device (250) to record a requested television program associated with said incoming recording task request.

9. A method of operating a recording and playback device (250) comprising a storage device (330) capable of storing television programs received from an external source, **characterized in that** said method comprises steps of:
receiving a first program recording command, wherein the first program recording command is operable to cause the recording and playback device (250) to store a first television program on the storage device (330) during a first time slot;
determining if sufficient space is available on the storage device (330) to store the first television program;
in response to a determination that sufficient space is not available on the storage device (330), identifying in an external communication network a plurality of remote recording and playback devices capable of recording the first television program; and
transmitting a recording task request to said remote recording and playback devices, wherein the recording task request is operable to cause the remote recording and playback devices to record the first television program during the first time slot, said remote recording and playback devices thereby being operable to provide data storage redundancy in an event of at least one of the remote recording and playback devices becoming unavailable for recording during said first time slot on account of priority conflict.

10. A method as claimed in Claim 9 comprising further steps of:
comparing the first program recording command to a second program recording command previously received by the first controller (350); and
determining if a second time slot associated with the second program recording command overlaps the first time slot.

11. A method as claimed in Claim 10 comprising further steps of:
in response to a determination that the first and second time slots overlap, accessing the remote recording and playback devices via the external communication network; and
transmitting the recording task request to the remote recording and playback devices, wherein the recording task request is operable to cause the remote recording and playback devices to record the first television program during the first time slot.

12. A method as claimed in Claim 11 wherein the storage device (330) stores the first and second program recording commands in a recording schedule table (455).

13. A method as claimed in Claim 11 wherein the step of identifying the remote recording and playback devices comprises sub-steps of:
accessing a central server in the external communication network; and requesting from the central server a list of remote recording and playback devices capable of recording the first television program.

14. A method as claimed in Claim 13 further comprising steps of:
transmitting to the central server disk space status information regarding an amount of available space on the storage device (330).

15. A method as claimed in Claim 14 further comprising the steps of transmitting to the central server a program recording schedule regarding television programs scheduled to be recorded by the video playback device (250).

16. A method as claimed in Claim 15 further comprising steps of:
receiving from a third recording and playback device an incoming recording task request, wherein the incoming recording task request is operable to cause the recording and playback device (250) to record a requested television program associated with the incoming recording task request.

## Patentansprüche

1. Aufzeichnungs- und Wiedergabegerät (250), das die nachfolgenden Elemente umfasst:
- eine Speicheranordnung (330), die imstande ist, Fernsehprogramme zu speichern, die von einem externen Mittel empfangen werden;
- einen ersten Controller (350), der imstande ist, einen ersten Programmaufzeichnungsbefehl zu empfangen, wobei der genannte erste Programmaufzeichnungsbefehl dafür sorgt, dass der genannte erste Controller (350) während eines ersten Zeitschlitzes ein erstes Fernsehprogramm auf der genannten Plattenspeicheranordnung (330) speichert; und
- einen zweiten Controller (370), der imstande ist, zu ermitteln, ob genügend Raum auf der genannten Speicheranordnung (330) verfügbar ist um das genannte erste Fernsehprogramm zu speichern, wobei der genannte zweite Controller (370) in Reaktion auf eine Ermittlung, dass in der genannten Speicheranordnung (330) nicht genügend Speicherraum verfügbar ist, weiterhin imstande ist, in einem externen Kommunikationsnetzwerk eine Anzahl Fernaufzeichnungs- und -wiedergabeanordnungen zu identifizieren, die imstande sind, das genannte erste Fernsehprogramm aufzuzeichnen und einen Aufzeichnungsaufgabenantrag zu den genannten Fernaufzeichnungs- und -wiedergabeanordnungen zu vermitteln, wobei der genannte Aufzeichnungsaufgabenantrag dafür sorgt, dass die Fernaufzeichnungs- und -wiedergabeanordnungen während des genannten ersten Zeitschlitzes das genannte erste Fernsehprogramm aufzeichnen, wobei die genannten Fernaufzeichnungs- und -wiedergabeanordnungen **dadurch** Datenspeicherredundanz liefern in einem Fall, dass wenigstens eine der Fernaufzeichnungs- und -wiedergabeanordnungen wegen eines Prioritätskonfliktes während des ersten Zeitschlitzes zum Aufzeichnen nicht verfügbar ist.

2. Aufzeichnungs- und Wiedergabegerät (250) nach Anspruch 1, wobei der genannte zweite Controller (370) weiterhin imstande ist, den genannten ersten Programmaufzeichnungsbefehl mit dem zweiten vorher von dem genannten ersten Controller (350) empfangenen Programmaufzeichnungsbefehl zu vergleichen und zu ermitteln, ob der zweite mit dem genannten zweiten Programmaufzeichnungsbefehl assoziierte Zeitschlitz den genannten ersten Zeitschlitz überlappt.

3. Aufzeichnungs- und Wiedergabegerät (250) nach Anspruch 2, wobei der genannte zweite Controller (370) in Reaktion auf die Ermittlung, dass der erste und der zweite Zeitschlitz einander überlappen, weiterhin imstande ist, über das genannte externe Kommunikationsnetzwerk auf eine oder mehrere der genannten Fernaufzeichnungs- und - wiedergabeanordnungen zuzugreifen und den genannten Aufzeichnungsaufgabenantrag der genannten einen oder mehreren der genannten Fernaufzeichnungs- und -wiedergabeanordnungen zuzuführen, wobei der genannte Aufzeichnungsaufgabenantrag dafür sorgt, dass die genannte eine oder mehrere der genannten Fernaufzeichnungs- und -wiedergabeanordnungen während des genannten ersten Zeitschlitzes das genannte erste Fernsehprogramm aufzeichnet bzw. aufzeichnen.

4. Aufzeichnungs- und Wiedergabegerät (250) nach Anspruch 3, weiterhin mit einem Speicher zum Speichern der genannten ersten und zweiten Programmaufzeichnungsbefehle in einer Aufzeichnungsplanungstabelle (455).

5. Aufzeichnungs- und Wiedergabegerät (250) nach Anspruch 3, wobei der genannte Controller (370) die genannten Aufzeichnungs- und Wiedergabeanordnungen **dadurch** identifiziert, dass auf einen zentralen Server in dem genannten externen Kommunikationsnetzwerk zugegriffen wird und dass dieser zentrale Server eine Liste mit Fernaufzeichnungs- und -wiedergabeanordnungen beantragt, die imstande sind, das genannte erste Fernsehprogramm aufzuzeichnen.

6. Aufzeichnungs- und Wiedergabegerät (250) nach Anspruch 5, wobei der genannte zweite Controller (370) imstande ist, dem genannten zentralen Server Plattenspeicherraumzustandsinformation in Bezug auf einen Betrag an verfügbarem Raum in den Speicheranordnungen (330) zu übertragen.

7. Aufzeichnungs- und Wiedergabegerät (250) nach Anspruch 6, wobei der genannte zweite Controller (370) weiterhin imstande ist, dem genannten zentralen Server einen Programmaufzeichnungsplan in Bezug auf geplante, von dem genannten Aufzeichnungs- und Wiedergabegerät (250) aufzuzeichnende Fernsehprogramme zuzuführen.

8. Aufzeichnungs- und Wiedergabegerät (250) nach Anspruch 7, wobei der genannte zweite Controller (370) weiterhin imstande ist, von einem dritten Videowiedergabegerät einen eintreffenden Aufzeichnungsaufgabenantrag zu empfangen, wobei der genannte eintreffende Aufzeichnungsaufgabenantrag dafür sorgt, dass das genannte Videowiedergabegerät (250) ein beantragtes, mit dem genannten eintreffenden Aufzeichnungsaufgabenantrag assoziiertes Fernsehprogramm aufzeichnet.

9. Verfahren zum Betreiben eines Aufzeichnungs- und Wiedergabegeräts (250) mit einer Speicheranordnung (330), die imstande ist, Fernsehprogramme zu speichern, die von einem externen Mittel empfangen werden, **dadurch gekennzeichnet, dass** das genannte Verfahren die nachfolgenden Verfahrensschritte umfasst:
- das Empfangen eines ersten Programmaufzeichnungsbefehls, wobei der erste Programmaufzeichnungsbefehl dafür sorgt, dass das Aufzeichnungs- und Wiedergabegerät (250) während eines ersten Zeitschlitzes in der Speicheranordnung (350) ein erstes Fernsehprogramm speichert;
- das Ermitteln, ob in der Speicheranordnung (330) genügend Speicherraum verfügbar ist um das erste Fernsehprogramm zu speichern;
- in Reaktion auf die Ermittlung, ob genügend Speicherraum in der Speicheranordnung (330) verfügbar ist, das Identifizieren einer Anzahl Fernaufzeichnungs- und -wiedergabeanordnungen, die imstande sind, das erste Fernsehprogramm aufzuzeichnen in einem externen Kommunikationsnetzwerk; und
- das Übertragen eines Aufzeichnungsaufgabenantrags zu den genannten Aufzeichnungs- und Wiedergabeanordnungen, wobei der Aufzeichnungsaufgabenantrag dafür sorgt, dass die Fernaufzeichnungs- und -wiedergabeanordnungen das erste Fernsehprogramm in dem ersten Zeitschlitz aufzeichnen, wobei die genannten Fernaufzeichnungs- und -wiedergabeanordnungen **dadurch** Datenspeicherredundanz schaffen in dem Fall, dass wenigstens eine der Fernaufzeichnungs- und -wiedergabeanordnungen zum Aufzeichnen während des genannten ersten Zeitschlitzes wegen eines Prioritätskonfliktes nicht verfügbar ist.

10. Verfahren nach Anspruch 9, das weiterhin die nachfolgenden Verfahrensschritte umfasst:
- das Vergleichen des ersten Programmaufzeichnungsbefehls mit einem zweiten Programmaufzeichnungsbefehl, der vorher von dem ersten Controller (350) empfangen wurde; und
- das Ermitteln, ob ein zweiter mit dem zweiten Programmaufzeichnungsbefehl assoziierter Zeitschlitz den ersten Zeitschlitz überlappt.

11. Verfahren nach Anspruch 10, das weiterhin die nachfolgenden Verfahrensschritte umfasst:
- in Reaktion auf eine Ermittlung, dass der ersten und der zweite Zeitschlitz einander überlappen, das Zugreifen auf die Fernaufzeichnungs- und -wiedergabeanordnungen über das externe Kommunikationsnetzwerk; und
- das Übertragen des Aufzeichnungsaufgabenantrags zu den Fernaufzeichnungs- und -wiedergabeanordnungen, wobei der Aufzeichnungsaufgabenantrag dafür sorgt, dass die Fernaufzeichnungs- und -wiedergabeanordnungen während des ersten Zeitschlitzes das erste Fernsehprogramm aufzeichnen.

12. Verfahren nach Anspruch 11, wobei die Speicheranordnung (330) den ersten und den zweiten Programmaufzeichnungsbefehl in einer Aufzeichnungsplantabelle (455) speichert.

13. Verfahren nach Anspruch 11, wobei der Schritt der Identifizierung der Fernaufzeichnungs- und -wiedergabeanordnungen die nachfolgenden Subschritte umfasst:
- das Zugreifen auf einen zentralen Server in dem externen Kommunikationsnetzwerk; und
- das Beantragen durch den zentralen Server einer Liste mit Fernaufzeichnungs- und -wiedergabeanordnungen, die imstande sind, das erste Fernsehprogramm aufzuzeichnen.

14. Verfahren nach Anspruch 13, das weiterhin den nachfolgenden Verfahrensschritt umfasst:
- das Übertragen von Plattenspeicherraumzustandsinformation in Bezug auf einen Betrag an verfügbarem Speicherraum in der Speicheranordnung zu dem zentralen Server.

15. Verfahren nach Anspruch 14, das weiterhin den Verfahrensschritt umfasst, wobei dem zentralen Server ein Programmaufzeichnungsplan in Bezug auf von dem Videowiedergabegerät (250) aufzuzeichnende Fernsehprogramme zugeführt wird.

16. Verfahren nach Anspruch 15, das weiterhin den nachfolgenden Schritt umfasst:
- das von einem dritten Aufzeichnungs- und Wiedergabegerät Empfangen eines eintreffenden Aufzeichnungsaufgabenantrags, wobei der eintreffende Aufzeichnungsaufgabenantrag dafür sorgt, dass das Aufzeichnungs- und Wiedergabegerät (25) ein mit dem eintreffenden Aufzeichnungsaufgabenantrag assoziiertes, beantragtes Fernsehprogramm aufzeichnet.

## Revendications

1. Lecteur - enregistreur vidéo (250) comprenant :
un dispositif de stockage (330) capable de stocker des programmes de télévision reçus d'une source extérieure;
un premier contrôleur (350) capable de recevoir une commande d'enregistrement de premier programme, où ladite commande d'enregistrement de premier programme est capable d'amener ledit premier contrôleur (350) à enregistrer un premier programme de télévision sur ledit dispositif de stockage sur disque (330) pendant un premier intervalle de temps; et
un deuxième contrôleur (370) capable de déterminer si un espace suffisant est disponible sur ledit dispositif de stockage (330) pour stocker ledit premier programme de télévision, où ledit deuxième contrôleur (370), en réponse à une détermination de ce qu'un espace suffisant n'est pas disponible sur ledit dispositif de stockage (330), est en outre capable d'identifier, dans un réseau extérieur de communication, une pluralité de lecteurs - enregistreurs vidéo distants capables d'enregistrer ledit premier programme de télévision et de transmettre une demande de tâche d'enregistrement auxdits lecteurs - enregistreurs vidéo distants, où ladite requête de tâche d'enregistrement est capable d'amener lesdits lecteurs - enregistreurs vidéo distants à enregistrer ledit premier programme de télévision pendant ledit premier intervalle de temps, lesdits lecteurs - enregistreurs vidéo distants étant de ce fait capables de procurer une redondance de stockage de données dans un cas où au moins un des lecteurs - enregistreurs vidéo distants devient indisponible pour enregistrer pendant ledit premier intervalle de temps du fait d'un conflit de priorité.

2. Lecteur - enregistreur vidéo (250) selon la revendication 1, où ledit deuxième contrôleur (370) est en outre capable de comparer ladite commande d'enregistrement de premier programme à une commande d'enregistrement de deuxième programme précédemment reçue par ledit premier contrôleur (350) et déterminer si un deuxième intervalle de temps associé à ladite commande d'enregistrement de deuxième programme chevauche ledit premier intervalle de temps.

3. Lecteur - enregistreur vidéo (250) selon la revendication 2, dans lequel ledit deuxième contrôleur (370), en réponse à une détermination de ce que lesdits premier et deuxième intervalles de temps se chevauchent, est en outre capable d'accéder à un ou plusieurs desdits lecteurs - enregistreurs vidéo distants via ledit réseau extérieur de communication, et de transmettre ladite requête de tâche d'enregistrement audit un ou plusieurs desdits lecteurs - enregistreurs vidéo distants, où ladite requête de tâche d'enregistrement est capable d'amener ledit un ou plusieurs desdits lecteurs - enregistreurs vidéo à enregistrer ledit premier programme de télévision pendant ledit premier intervalle de temps.

4. Lecteur - enregistreur vidéo (250) selon la revendication 3, comprenant en outre une mémoire pour stocker lesdites commandes d'enregistrement de premier et deuxième programmes dans une table de programmation d'enregistrement (455).

5. Lecteur - enregistreur vidéo (250) selon la revendication 3, dans lequel ledit deuxième contrôleur (370) identifie lesdits lecteurs - enregistreurs vidéo distants en accédant à un serveur central dans ledit réseau extérieur de communication et en requérant dudit serveur central une liste de lecteurs - enregistreurs vidéo distants capables d'enregistrer ledit premier programme de télévision.

6. Lecteur - enregistreur vidéo (250) selon la revendication 5, dans lequel ledit deuxième contrôleur (370) est capable de transmettre audit serveur central des informations d'état d'espace de disque concernant une quantité d'espace disponible sur ledit dispositif de stockage (330).

7. Lecteur - enregistreur vidéo (250) selon la revendication 6, dans lequel ledit deuxième contrôleur (370) est en outre capable de transmettre audit serveur central une programmation d'enregistrement de programme concernant des programmes de télévision programmés pour être enregistrés par ledit lecteur - enregistreur vidéo (250).

8. Lecteur - enregistreur vidéo (250) selon la revendication 7, dans lequel ledit deuxième contrôleur (370) est en outre capable de recevoir d'un troisième lecteur - enregistreur vidéo une requête entrante de tâche d'enregistrement, où ladite requête entrante de tâche d'enregistrement est capable d'amener ledit lecteur - enregistreur vidéo (250) à enregistrer un programme de télévision requis associé à ladite requête entrante de tâche d'enregistrement.

9. Procédé de fonctionnement d'un lecteur - enregistreur vidéo (250) comprenant un dispositif de stockage (330) capable de stocker des programmes de télévision reçus d'une source extérieure, **caractérisé en ce que** ledit procédé comprend les étapes suivantes :
recevoir une commande d'enregistrement de premier programme, où la commande d'enregistrement de premier programme est capable d'amener le lecteur - enregistreur vidéo (250) à enregistrer un premier programme de télévision sur le dispositif de stockage (330) pendant un premier intervalle de temps;
déterminer si un espace suffisant est disponible sur le dispositif de stockage (330) pour stocker le premier programme de télévision;
en réponse à une détermination de ce qu'un espace suffisant n'est pas disponible sur le dispositif de stockage (330), identifier, dans un réseau extérieur de communication, une pluralité de lecteurs - enregistreurs vidéo distants capables d'enregistrer le premier programme de télévision; et
transmettre une requête de tâche d'enregistrement auxdits lecteurs - enregistreurs vidéo distants, où la requête de tâche d'enregistrement est capable d'amener les lecteurs - enregistreurs vidéo distants à enregistrer le premier programme de télévision pendant le premier intervalle de temps, lesdits lecteurs - enregistreurs vidéo distants étant de ce fait capables de procurer une redondance de stockage de données dans un cas où au moins un des lecteurs - enregistreurs vidéo distants devient indisponible pour enregistrer pendant ledit premier intervalle de temps du fait d'un conflit de priorité.

10. Procédé selon la revendication 9 comprenant en outre les étapes suivantes :
comparer la commande d'enregistrement de premier programme à une commande d'enregistrement de deuxième programme précédemment reçue par le premier contrôleur (350); et
déterminer si un deuxième intervalle de temps associé à la commande d'enregistrement de deuxième programme chevauche le premier intervalle de temps.

11. Procédé selon la revendication 10 comprenant en outre les étapes suivantes :
en réponse à une détermination de ce que les premier et deuxième intervalles de temps se chevauchent, accéder aux lecteurs - enregistreurs vidéo distants via le réseau extérieur de communication; et
transmettre la requête de tâche d'enregistrement aux lecteurs - enregistreurs vidéo distants, où la requête de tâche d'enregistrement est capable d'amener les lecteurs - enregistreurs vidéo distants à enregistrer le premier programme de télévision pendant le premier intervalle de temps.

12. Procédé selon la revendication 11, dans lequel le dispositif de stockage (330) stocke les commandes d'enregistrement de premier et deuxième programmes dans une table de programmation d'enregistrement (455).

13. Procédé selon la revendication 11, dans lequel l'étape d'identifier les lecteurs
- enregistreurs vidéo distants comprend les sous-étapes suivantes : accéder à un serveur central dans le réseau extérieur de communication; et requérir du serveur central une liste de lecteurs - enregistreurs vidéo distants capables d'enregistrer le premier programme de télévision.

14. Procédé selon la revendication 13 comprenant en outre les étapes de :
transmettre au serveur central des informations d'état d'espace de disque concernant une quantité d'espace disponible sur le dispositif de stockage (330).

15. Procédé selon la revendication 14, comprenant en outre les étapes de transmettre au serveur central une programmation d'enregistrement de programme concernant des programmes de télévision programmés pour être enregistrés par le lecteur - enregistreur vidéo (250).

16. Procédé selon la revendication 15 comprenant en outre les étapes de :
recevoir d'un troisième lecteur - enregistreur vidéo une requête entrante de tâche d'enregistrement, où la requête entrante de tâche d'enregistrement est capable d'amener le lecteur - enregistreur vidéo (250) à enregistrer un programme de télévision requis associé à la requête entrante de tâche d'enregistrement.
